# EUROPEAN PATENT APPLICATION

(11) **EP 2 876 577 A1**
(43) Date of publication of application: **27.05.2015**
(21) Application number: 14170613.5
(22) Date of filing: 30.05.2014
(51) Int. Cl.: G06K 9/22, G06K 9/32

(54) **Electronic device and method for recognizing character in electronic device**

(30) Priority: 26.11.2013 KR 20130144654
(71) Applicant: Samsung Electronics Co., Ltd, Gyeonggi-do 443-742 (KR)
(72) Inventor: Yeom, Dong-Hyun, 443-742 Gyeonggi-do (KR)
(74) Representative: Jenkins, Richard Gavin

(57) **Abstract**

An electronic device and a method are provided for recognizing a character in the electronic device. The electronic device includes a display unit configured to, upon receipt of an image in a real-time character recognition method, display a character recognition area defined for character recognition adjusted to an inclination angle of an object included in the received image. The electronic device also includes a controller configured to detect the inclination angle of the object included in the image, to adjust an angle of the character recognition area defined for character recognition to the inclination angle of the object, and to control recognition of a character from the object in the angle-adjusted character recognition area.

## Description

### BACKGROUND OF THE INVENTION

### Field of the Invention

The present disclosure relates generally to an electronic device and a method for recognizing a character in the electronic device, and more particularly, to an electronic device that increases a character recognition rate and a method for recognizing a character in the electronic device.

### Description of the Related Art

Current Optical Character Recognition (OCR) schemes may be categorized into snapshot OCR and real-time OCR. In snapshot OCR, a pre-captured photo is read from a memory and characters are recognized from the read photo, whereas in real-time OCR, an image is received in real time from a camera or a pre-captured video and characters are recognized by processing the image.

Recently, electronic devices including glasses-type electronic devices have provided a service of recognizing characters in real time from a camera or an image device and providing the recognized characters to users in the real-time OCR scheme.

In the real-time OCR scheme, an OCR recognizer may recognize characters from an image of an object located horizontally within the angle of view of a camera or a character recognition area among images received from the camera. If a gravity sensor of the electronic device senses rotation of the electronic device, the character recognition area is also rotated. Thus the OCR recognizer may receive an image of an object within the character recognition area and may recognize characters from the object image.

Only if a character recognition rate is equal to or higher than a certain level in successively received images, the real-time OCR scheme enhances user experience, which success of the new service is dependent on.

If rotation of an electronic device is sensed only through a gravity sensor, the rotation of the electronic device may be sensed only when the electronic device is positioned vertically, not horizontally.

For example, if the electronic device is positioned horizontally to recognize characters from a book placed on a floor in real-time OCR, rotation of the electronic device is not sensed. The resulting failure in rotating a character recognition area may lead to failure in character recognition.

Or when a user wearing a glasses-type electronic device reads a book on a floor with the user's neck bent down in real-time OCR and turns around to read another book besides the book, a circular rotation occurs around the neck of the user. Therefore, the user needs to adopt a proper posture on the other book to recognize the other book.

Or when a user wearing a glasses-type electronic device reads a book on a floor with the user's neck bent down in real-time OCR and the user's right chin rested in the user's hand, rotation of the electronic device is not sensed. Consequently, characters may not be recognized.

If characters are arranged in a different direction, the electronic device needs to be set to a different rotational direction corresponding to the arrangement direction of the characters. For example, if characters run down vertically, the electronic device needs to be rotated vertically. Alternatively, if characters are to be read from the right side to the left side, the electronic device needs to be set to a different recognition direction. The above information is presented as background information only to assist with an understanding of the present disclosure. No determination has been made, and no assertion is made, as to whether any of the above might be applicable as prior art with regard to the present disclosure.

### SUMMARY OF THE INVENTION

To address the above-discussed deficiencies, it is a primary object to provide an electronic device that increases a character recognition rate irrespective of a rotation position of the electronic device, and a method for recognizing a character in the electronic device.

Another aspect of the present disclosure is to provide an electronic device that increases a character recognition rate irrespective of a character arrangement direction, and a method for recognizing a character in the electronic device.

In accordance with an aspect of the present disclosure, there is provided an electronic device. The electronic device includes a display unit configured to, upon receipt of an image in a real-time character recognition method, display a character recognition area defined for character recognition adjusted to an inclination angle of an object included in the received image. The electronic device also includes a controller configured to detect the inclination angle of the object included in the image, to adjust an angle of the character recognition area defined for character recognition to the inclination angle of the object, and to control recognition of a character from the object in the angle-adjusted character recognition area.

In accordance with another aspect of the present disclosure, a method is provided for recognizing a character in an electronic device. The method includes detecting an inclination angle of an object included in a received image in a real-time character recognition method, adjusting an angle of a character recognition area defined for character recognition to the inclination angle of the object, and recognizing a character from the object in the angle-adjusted character recognition area.

Other aspects, advantages, and salient features of the disclosure will become apparent to those skilled in the art from the following detailed description, which, taken in conjunction with the annexed drawings, discloses example embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a block diagram of an electronic device according to various embodiments of the present disclosure;
FIGS. 2A, 2B, 2C, and 2D illustrate processes for operations for recognizing a character in an electronic device according to an embodiment of the present disclosure;
FIGS. 3A, 3B, 3C, and 3D illustrate detection of an inclination angle of an object included in an image with respect to a first reference line (e.g., a horizontal reference line) according to an embodiment of the present disclosure;
FIGS. 4A, 4B, 4C, and 4D illustrate an operation for recognizing a character in a first direction (i.e., a horizontal direction) according to an embodiment of the present disclosure;
FIGS. 5A and 5B illustrate detection of an inclination angle of an object included in an image with respect to a second reference line (e.g., a vertical reference line) according to an embodiment of the present disclosure;
FIGS. 6A, 6B, 6C, and 6D illustrate an operation for recognizing a character in a second direction (i.e., a vertical direction) according to an embodiment of the present disclosure;
FIG. 7 illustrates an operation for recognizing a character using a plurality of electronic devices according to another embodiment of the present disclosure;
FIGS. 8 and 9 illustrate processes for operations for recognizing a character using a plurality of electronic devices according to embodiments of the present disclosure; and
FIG. 10 illustrates process for an operation for recognizing a character using a plurality of electronic devices according to another embodiment of the present disclosure.

Throughout the drawings, like reference numerals will be understood to refer to like parts, components, and structures.

### DETAILED DESCRIPTION OF THE EXEMPLARY EMBODIMENTS

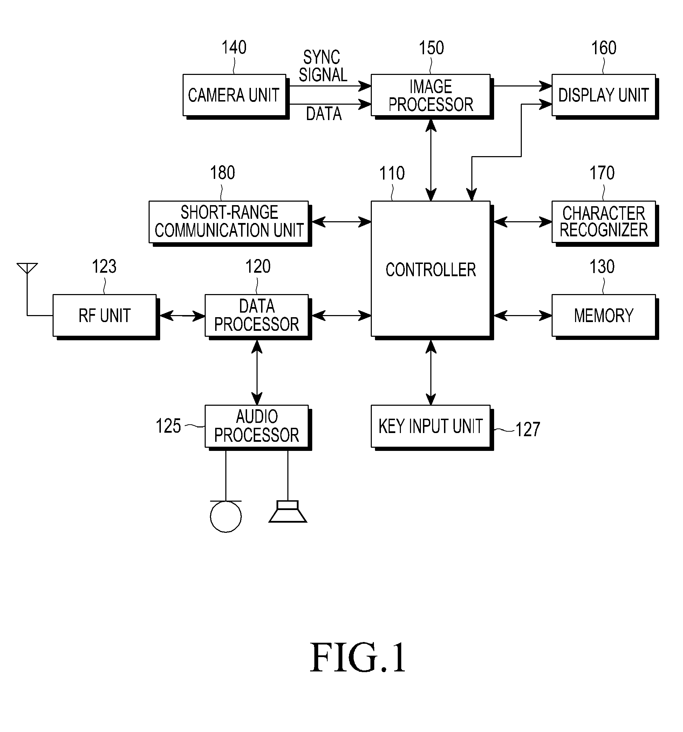

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or method. The following description with reference to the accompanying drawings is provided to assist in a comprehensive understanding of example embodiments of the disclosure as defined by the claims and their equivalents. It includes various specific details to assist in that understanding but these are to be regarded as merely examples. Accordingly, those of ordinary skilled in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of example embodiments of the present disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

An electronic device according to various embodiments of the present disclosure may be a device with communication capabilities. For example, the electronic device may be one or a combination of two or more of various devices such as smart phone, tablet Personal Computer (PC), mobile phone, video phone, e-Book reader, desktop PC, laptop PC, Netbook computer, Personal Digital Assistant (PDA), Portable Multimedia Player (PMP), MP3 player, mobile medical equipment, electronic bracelet, electronic necklace, electronic accessory, camera, wearable device, electronic clock, wrist watch, home appliance (e.g., refrigerator, air conditioner, cleaner, oven, microwave, washer, air purifier, and the like), Artificial Intelligence (AI) robot, Television (TV), Digital Versatile Disk (DVD) player, audio player, various medical devices (e.g., Magnetic Resonance Angiography (MRA), Magnetic Resonance Imaging (MRI), Computed Tomography (CT), medical camcorder, ultrasonic equipment, and the like), navigation device, Global Positioning System (GPS) receiver, Event Data Recorder (EDR), Flight Data Recorder (FDR), set-top box, TV box (e.g., Samsung HomeSync™, Apple TV™, Google TV™, or the like), electronic dictionary, automotive infotainment device, electronic equipment for ship (e.g., marine navigation device, gyro compass, and the like), avionics, security equipment, electronic apparel, electronic key, camcorder, game console, Head-Mounted Display (HMD), flat panel display device, electronic picture frame, electronic album, furniture or part of building/structure with communication capabilities, electronic board, electronic signature receiving device, wearable device, projector, and the like. It will be apparent to those of ordinary skill in the art that the electronic device according to various embodiments of the present disclosure is not limited to the aforementioned devices.

In various embodiments of the present disclosure, the term 'character' may cover any system of visual symbols used for communication, such as a letter or a symbol.

While it is described in various embodiments of the present disclosure that a first reference, a first reference line, or 'first' in a first-direction character recognition scheme refers to horizontal and a second reference, a second reference line, or 'second' in a second-direction character recognition scheme refers to vertical, 'first' may refer to vertical and 'second' may refer to horizontal. Thus it should be understood that 'first' or 'second' is not limited to horizontal or vertical.

FIG. 1 illustrates a block diagram of an electronic device according to various embodiments of the present disclosure.

Referring to FIG. 1, a Radio Frequency (RF) unit 123 is responsible for wireless communication of the electronic device. The RF unit 123 may include an RF transmitter for upconverting the frequency of a transmission signal and amplifying the upconverted transmission signal, and an RF receiver for low-noise-amplifying a received signal and downconverting the frequency of the low-noise-amplified received signal.

A data processor 120 may include a transmitter for encoding and modulating the transmission signal, and a receiver for demodulating and decoding the received signal. Thus, the data processor 120 may include a Modulator/Demodulator (SCHEMEM) and a Coder/Decoder (CODEC). The CODEC may include a data CODEC for processing packet data and the like, and an audio CODEC for processing an audio signal such as voice.

An audio processor 125 may play an audio signal received from the audio CODEC in the data processor 120, through a Speaker (SPK), or may transmit a transmission audio signal picked up by a Microphone (MIC) to the audio CODEC in the data processor 120.

A key input unit 127 may include alphanumerical keys for entering numeric/character information, and function keys for setting various functions. The key input unit 127 may be implemented as a touch screen, a capacitive touch panel, a resistive touch panel, and the like, for entering software keys as well as hardware keys. In addition, the key input unit 127 may be implemented as a hardware device that senses a hovering input or a pen input.

A memory 130 may include a program memory and a data memory. The program memory may store programs for controlling the overall operation of the electronic device, and control programs for controlling adjustment of an angle of a character recognition area in correspondence with an inclination angle of an object in a real-time character recognition scheme and recognition of a character from an object located in the character recognition area. The data memory may temporarily store data generated during execution of the programs.

The memory 130 may store characters recognized in the real-time character recognition scheme according to various embodiments of the present disclosure. The characters may be stored in the memory 130 in order of recognition.

A controller 110 may control the overall operation of the electronic device.

In various embodiments of the present disclosure, the controller 110 may detect an inclination angle of an object included in an image received according to a real-time character recognition method and adjust an angle of the character recognition area defined for character recognition to the angle of the object. Then the controller 110 may control transmission of the object within the angle-adjusted character recognition area to a character recognizer 170 such that the character recognizer 170 may recognize a character from the object. If the object is maintained for a predetermined time or longer within the character recognition area defined for character recognition in the real-time character recognition scheme, the controller 110 may control transmission of the object to the character recognizer 170.

In various embodiments of the present disclosure, the controller 110 may recognize an object along a horizontal direction from an image received according to the real-time character recognition method, detect a horizontal reference line using the recognized object, and detect an inclination angle of the object with respect to the horizontal reference line. The controller 110 may adjust an angle of a character recognition area to the inclination angle of the object and may control transmission of the object in the angle-adjusted character recognition area to the character recognizer 170. If the character recognizer 170 recognizes a character from the object, the controller 110 may switch to a horizontal character recognition scheme.

When the controller 110 initially switches to the real-time character recognition method, the controller 110 may set an angle r to '0' and a weight k to `1'. Each time a character is recognized from an object in an angle-adjusted character recognition area, the controller 110 may increase the weight k.

In various embodiments of the present disclosure, when the electronic device moves in the horizontal character recognition scheme, the controller 110 may determine a type of the movement of the electronic device. If the movement of the electronic device is a vertical movement involving inclination of the electronic device, the controller 110 may detect an angle of the electronic device. Then the controller 110 may adjust an angle of a character recognition area to the angle of the electronic device and transmit an object located in the angle-adjusted character recognition area to the character recognizer 170. When the character recognizer 170 recognizes a character from the received object, the controller 110 may increase the weight k.

In various embodiments of the present disclosure, when the electronic device moves in the horizontal character recognition scheme, the controller 110 may determine whether the movement of the electronic device is a scheme switch triggering movement. If the movement of the electronic device is a scheme switch triggering movement, the controller 110 may switch to a vertical character recognition scheme. In an embodiment, when the electronic device moves, the controller 110 may compare a variation in the movement of the electronic device or a difference between a previous image and a current image with a threshold. If the variation in the movement of the electronic device or the difference between the previous image and the current image is equal to or higher than the threshold, the controller 110 may determine that the movement of the electronic device is a scheme switch triggering movement.

If the movement of the electronic device is a scheme switch triggering movement, the controller 110 may recognize an object along the horizontal direction from an image received according to the real-time character recognition method, detect a horizontal reference line using the recognized object, and detect an inclination angle of the object with respect to the horizontal reference line. The controller 110 may adjust an angle of the character recognition area to the inclination angle of the object and may control transmission of the object in the angle-adjusted character recognition area to the character recognizer 170. If the character recognizer 170 does not recognize a character from the object, the controller 110 may switch to the vertical character recognition scheme and then may reset the angle r to '0' and the weight k to `1'.

In various embodiments of the present disclosure, the controller 110 may recognize an object along a vertical direction from an image received according to the real-time character recognition method, detect a vertical reference line using the recognized object, and detect an inclination angle of the object with respect to the vertical reference line. The controller 110 may adjust an angle of a character recognition area to the inclination angle of the object and may control transmission of the object located in the angle-adjusted character recognition area to the character recognizer 170. If the character recognizer 170 recognizes a character from the object, the controller 110 may increase the weight k.

In various embodiments of the present disclosure, when the electronic device moves in the vertical character recognition scheme, the controller 110 may determine a type of the movement of the electronic device. If the movement of the electronic device is a vertical movement involving inclination of the electronic device, the controller 110 may detect an angle of the electronic device. Then the controller 110 may adjust an angle of a character recognition area to the angle of the electronic device and transmit an object located in the angle-adjusted character recognition area to the character recognizer 170. When the character recognizer 170 recognizes a character from the received object, the controller 110 may increase the weight k.

In various embodiments of the present disclosure, if a character is recognized in a character recognition preview mode, the controller 110 may control transmission of the recognized character to another electronic device connected to the electronic device by short-range communication through a short-range communication unit 180, such that the recognized character may be displayed on the other electronic device.

In various embodiments of the present disclosure, if an image is received according to the real-time character recognition method, the controller 110 may control transmission of the received image to another electronic device connected to the electronic device by short-range communication through the short-range communication unit 180, such that the other electronic device may perform character recognition on the image.

In various embodiments of the present disclosure, if a character is recognized according to the real-time character recognition scheme, the controller 110 may store the recognized character in the memory 130. Upon selection of an option to view the recognized character by a user, the controller 110 may control display of the character stored in the memory 130.

The character recognizer 170 may receive an image of an object kept located in a character recognition area for a predetermined time or longer in the real-time character recognition method, recognize a character from the image of the object, and transmit a recognition result to the controller 110. The character recognizer 170 may be an Optical Character Recognition (OCR) recognizer.

The short-range communication unit 180 may provide short-range wireless communication. For example, the short-range communication may include Bluetooth communication, Near Field Communication (NFC), infrared communication, or the like.

A display unit 160 may use Liquid Crystal Display (LCD) as its display panel. In this embodiment, the display unit 160 may include an LCD controller, a memory for storing image data, and an LCD display panel. If the LCD panel is implemented as a touch screen, the LCD panel may operate as an input unit. In this embodiment, the same keys as those on the key input unit 127 may be displayed on the display unit 160.

If the display unit 160 is used as a touch screen unit as it is implemented in a touch screen manner, the touch screen unit may include a Touch Screen Panel (TSP) with a plurality of sensor panels. The sensor panels may include a capacitive sensor panel that senses a coarse touch by fingertips, and an electromagnetic induction sensor panel that senses a fine touch such as a touch of a stylus pen.

In various embodiments of the present disclosure, the display unit 160 may display a character recognition area defined for character recognition, while displaying a received image in the real-time character recognition method. The character recognition area may be displayed with its angle adjusted to an inclination angle of an object included in the image.

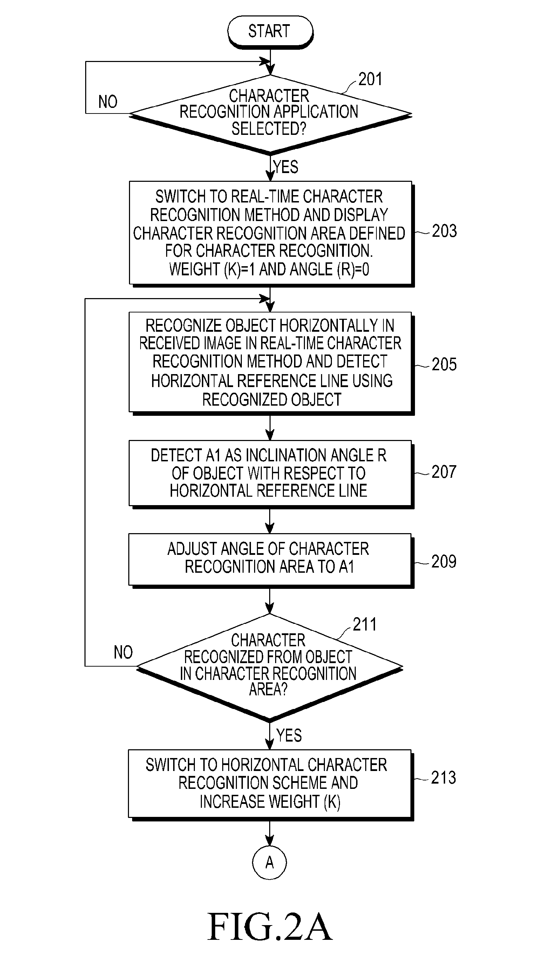

An operation for recognizing a character in the electronic device having the above-described configuration will be described in detail with reference to FIGS. 2A to 10.

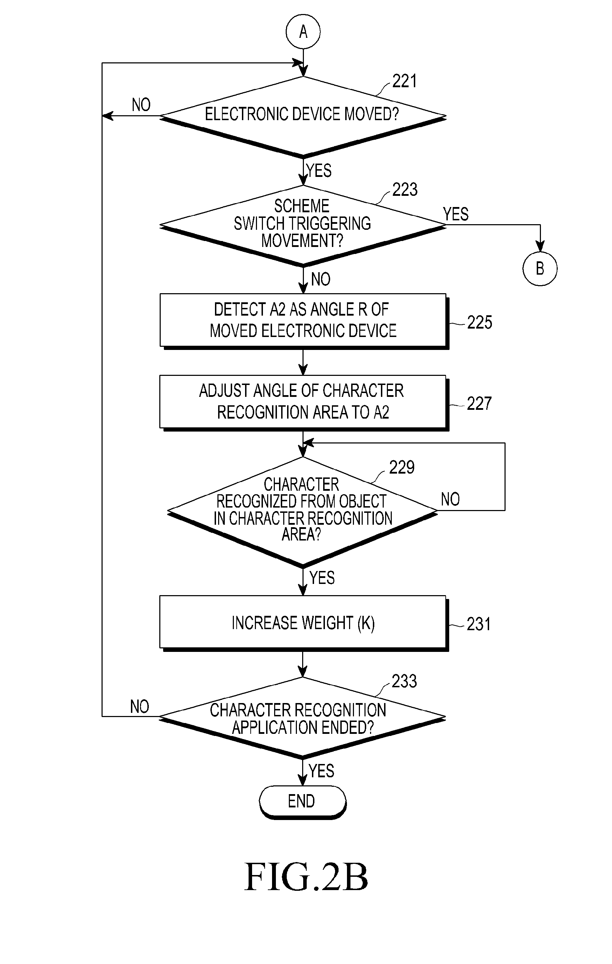

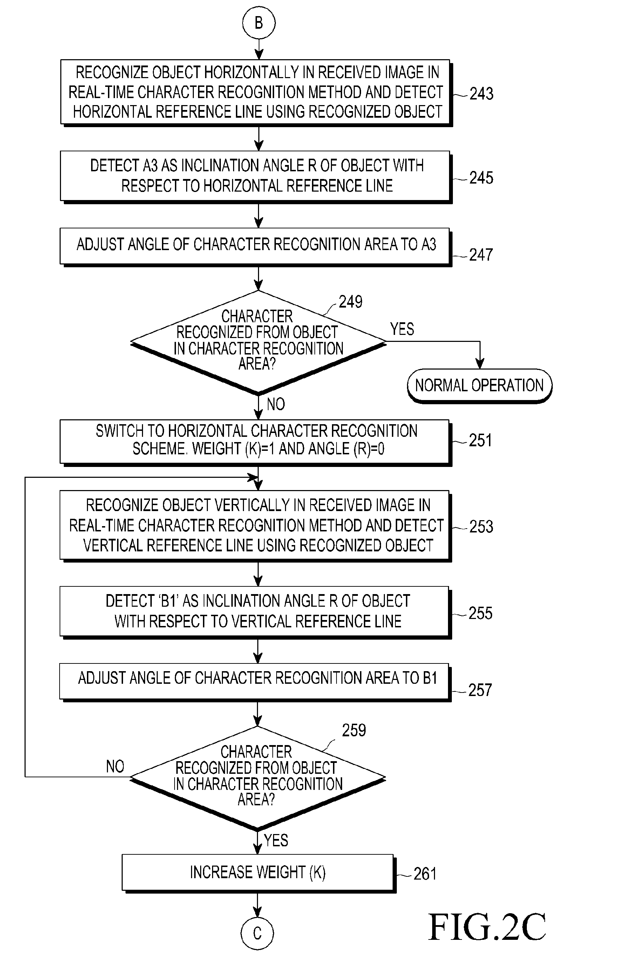

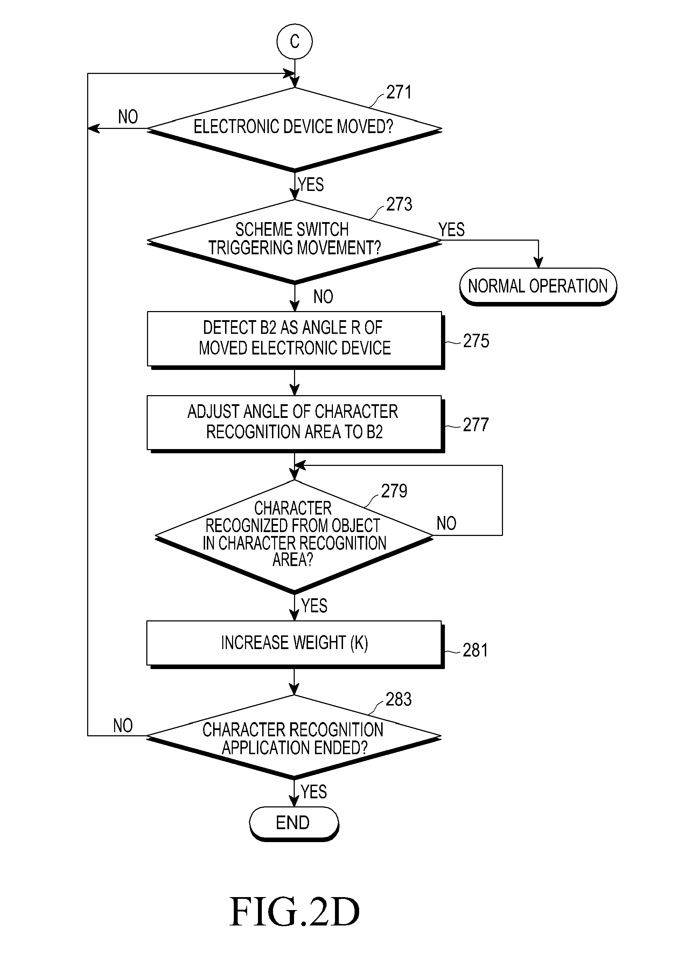

FIGS. 2A, 2B, 2C, and 2D illustrate processes for operations for recognizing a character in an electronic device according to an embodiment of the present disclosure. A character recognition operation in the horizontal character recognition scheme is described in FIGS. 2A and 2B, whereas a character recognition operation in the vertical character recognition scheme is described in FIGS. 2C and 2D.

The embodiment of the present disclosure may be described with reference to FIG. 1.

Referring to FIG. 2A, upon selection of a character recognition application in the electronic device in operation 201, the controller 110 may execute the selected character recognition application. As the character recognition application is executed, the controller 110 may switch to a real-time character recognition method in order to display an image received from a camera unit 140 on the display unit 160 and display a character recognition area defined for character recognition according to the real-time character recognition method in operation 203. If the controller 110 initially switches to the real-time character recognition method upon execution of the character recognition application in the electronic device, the controller 110 may set a weight k indicating a success rate of character recognition to '1' and an angle to `0'.

The controller 110 may recognize an object included in an image received according to the real-time character recognition method, along a reference direction set by default, for example, a horizontal direction and detect a horizontal reference line using the recognized object in operation 205.

Then the controller 110 may detect an inclination angle 'a1' of the object as the angle r with respect to the detected horizontal reference line in operation 207.

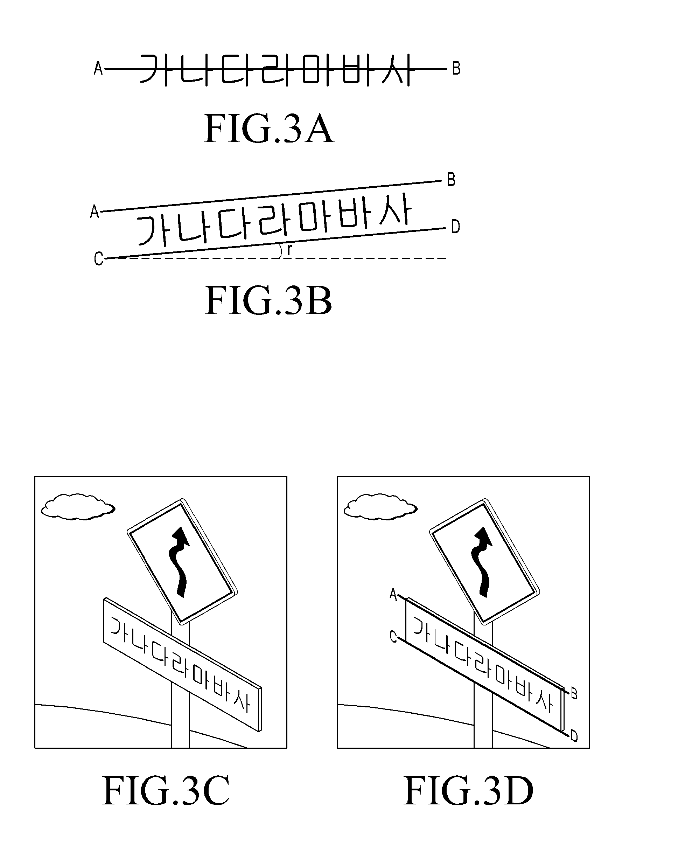

The inclination angle of the object included in the image may be detected in the real-time character recognition method by known technology. An operation for detecting an inclination angle of an object will be described, taking an example, with reference to FIGS. 3A, 3B, 3C, and 3D.

FIGS. 3A, 3B, 3C, and 3D illustrate an operation for detecting an inclination angle of an object included in an image with respect to a horizontal reference line in an electronic device according to an embodiment of the present disclosure.

Referring to FIG. 3A, if characters are arranged horizontally in a received image and a non-inclined object such as 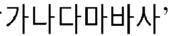 is recognized in the real-time character recognition method, the controller 110 may detect, as a horizontal reference line, a line A-B connecting the center of a first character to the center of a last character, using the start of the characters as a reference and may determine the inclination angle r of the object 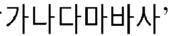 with respect to the detected horizontal reference line to be '0'. Referring to FIG. 3B, if characters are arranged horizontally in a received image and an inclined object such as 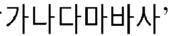 is recognized in the real-time character recognition method, the controller 110 may detect, as a horizontal reference line, one of two parallel lines A-B and C-D using the start of the characters as a reference. Herein, the line A-B runs along the tops of the characters and the line C-D runs along the bottoms of the characters. Then the controller 110 may determine the inclination angle r of the object 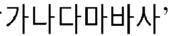 with respect to the detected horizontal reference line to be 'a1'. If the electronic device or a paper sheet having the characters written on it rotates, an image including the inclined object 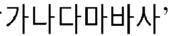 with characters arranged horizontally may be displayed as illustrated in FIG. 3B.

Referring to FIG. 3C, when an image is received in the real-time character recognition method, the controller 110 may detect outlines of an outer figure surrounding an object 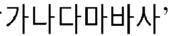 in the image. Referring to FIG. 3D, the controller 110 may then detect, as a horizontal reference line, one of the longest ones A-B and C-D of outlines A-B, C-D, A-C, and B-D of the outer figure surrounding the object 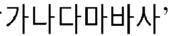 and determine the inclination angle r of the object 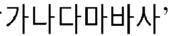 with respect to the detected horizontal reference line to be 'a1'.

With continued reference to FIG. 2A, if the controller 110 determines the inclination angle r of the object to be 'a1' in operation 207, the controller 110 may adjust an angle of the character recognition area to the inclination angle 'a1' in operation 209.

If the object is maintained for a predetermined time or longer within the character recognition area adjusted to the inclination angle 'a1', the controller 110 may transmit the object located within the character recognition area to the character recognizer 170. Upon receipt of a processing result indicating successful character recognition from the character recognizer 170, the controller 110 may determine that character recognition from the object in the character recognition area is successful in operation 211 and may increase the weight k by, for example, 1 due to the successful character recognition in operation 213.

In an embodiment, if a character is not recognized from the object in the character recognition area adjusted to the inclination angle of the object during character recognition in the horizontal character recognition scheme, for example, due to movement of a paper sheet having the object on it, the controller 110 may adjust the angle of the character recognition area to a changed inclination angle of the object and may then recognize a character from the object in operations 205 through 213.

In this manner, it may be determined whether the electronic device has been moved during character recognition by adjusting a character recognition area to an inclination angle of an object included in an image in the horizontal character recognition scheme in operations 205 through 213.

Referring to FIG. 2B, upon detection of movement of the electronic device in operation 221, the controller 110 may determine a type of the movement of the electronic device. If determining that the movement of the electronic device is not a scheme switch triggering movement but a vertical movement involving inclination of the electronic device in operation 223, the controller 110 may detect an inclination angle `a2' of the electronic device as the angle r in operation 225.

If the movement of the electronic device is a horizontal movement without involving inclination of the electronic device, the controller 110 may not detect the angle of the electronic device because the controller 110 may only need to perform character recognition on the object located in the character recognition area adjusted to the inclination angle 'a1'. In contrast, if the movement of the electronic device is a vertical movement involving inclination of the electronic device, the angle of the character recognition area defined for character recognition may only need to be adjusted and thus the controller 110 may detect the angle of the electronic device changed by the movement of the electronic device.

The controller 110 may adjust the angle of the character recognition area to the inclination angle r of the electronic device being 'a2' in operation 227.

If the object is maintained for a predetermined time or longer in the character recognition area adjusted to the inclination angle of the object `a2', the controller 110 may transmit the object located in the character recognition area to the character recognizer 170. Upon receipt of a processing result indicating successful character recognition, the controller 110 may determine that character recognition from the object in the character recognition area is successful in operation 229 and may increase the weight k, for example, by 1 in operation 231.

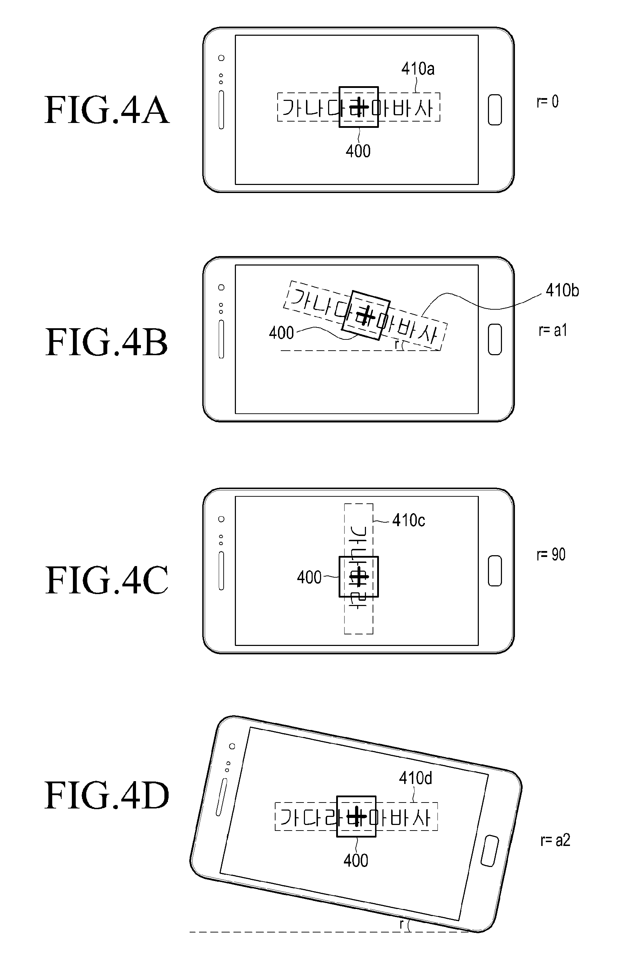

In operation 233, upon selection of termination of the character recognition application, the controller 110 may end the character recognition application. In an embodiment, if determining that termination of the character recognition application has not been selected in operation 233, the controller 110 may recognize a character from the image by adjusting the angle of the character recognition area to the angle of the electronic device according to movement of the electronic device in operations 221 through 233. With reference to FIGS. 4A to 4D, a character recognition operation in the horizontal character recognition scheme illustrated in FIGS. 2A and 2B will be described below, taking an example.

FIGS. 4A to 4D illustrate an operation for recognizing a character in the horizontal character recognition scheme in an electronic device according to an embodiment of the present disclosure.

Referring to FIG. 4A, when a non-inclined object 410a such as 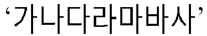 is recognized from an image received from the camera unit 140, a character recognition area 400 is displayed with its angle adjusted to '0' being the inclination angle r of the object 410a.

Referring to FIG. 4B, when an inclined object 410b such as 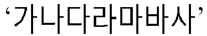 is recognized from an image received from the camera unit 140 due to movement of a paper sheet with the characters written on it, the character recognition area 400 is displayed with its angle adjusted to 'a1' being the inclination angle r of the object 410b. Referring to FIG. 4C, when an inclined object 410c such as 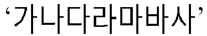 is recognized from an image received from the camera unit 140 due to movement of the paper sheet with the characters written on it, the character recognition area 400 is displayed with its angle adjusted to 90 degrees being the inclination angle r of the object 410c.

Referring to FIG. 4D, when an inclined object 410d such as 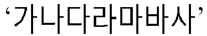 is recognized from an image received from the camera unit 140 due to movement of the paper sheet with the characters written on it, the character recognition area 400 is displayed with its angle adjusted to 'a2' being the inclination angle r of the object 410d. If determining that the movement of the electronic device is a scheme switch triggering movement in operation 223, the controller 110 may switch the electronic device to the vertical character recognition scheme. If a variation in the movement of the electronic device or a difference between a current image and a previous image is equal to or higher than a threshold, the controller 110 may determine that the movement of the electronic device is a scheme switch triggering movement.

Referring to FIG. 2C, if the controller 110 determines that the movement of the electronic device is a scheme switch triggering movement, the controller 110 may recognize an object from a received image in the horizontal character recognition scheme of the real-time character recognition method and detect a horizontal reference line using the recognized object in operation 243. Then the controller 110 may determine the inclination angle r of the object to be 'a3' with respect to the horizontal reference line in operation 245.

In operation 247, the controller 110 may adjust the angle of the character recognition area to 'a3'.

If the object is kept in the character recognition area adjusted to the inclination angle `a3' of the object for a predetermined time or longer, the controller 110 may transmit the object to the character recognizer 170. Upon receipt of a processing result indicating failed character recognition from the character recognizer 170, the controller 110 may switch to the vertical character recognition scheme and may reset the weight k to '1' and the angle r to '0' in operation 249.

The controller 110 may recognize an object from a received image in the vertical character recognition scheme of the real-time character recognition method and detect a vertical reference line using the recognized object in operation 253. Then the controller 110 may determine the inclination angle r of the object to be 'b1' with respect to the vertical reference line in operation 255.

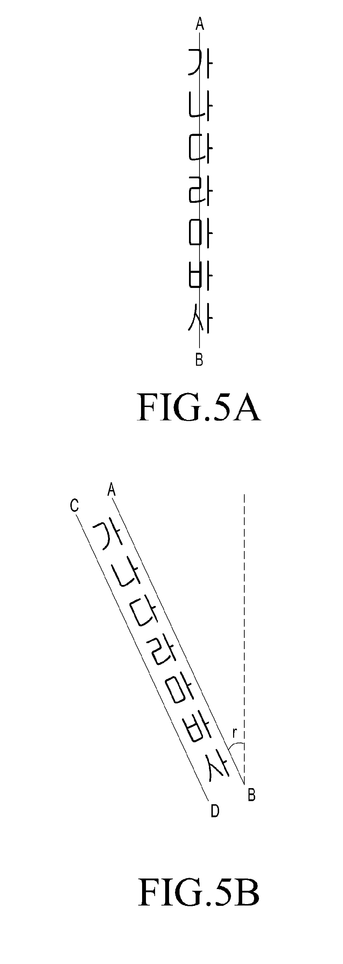

The inclination angle of the object included in the image may be detected in the real-time character recognition method by known technology. An operation for detecting an inclination angle of an object will be described, taking an example, with reference to FIGS. 5A and 5B.

FIGS. 5A and 5B illustrate an operation for detecting an inclination angle of an object included in an image with respect to a vertical reference line in an electronic device according to an embodiment of the present disclosure.

Referring to FIG. 5A, if characters are arranged vertically in a received image and a non-inclined object such as 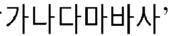 is recognized in the real-time character recognition method, the controller 110 may detect, as a vertical reference line, a line A-B connecting the center of a first character to the center of a last character, using the start of the characters as a reference and may determine the inclination angle r of the object 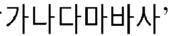 with respect to the detected vertical reference line to be '0'. Referring to FIG. 5B, if characters are arranged vertically in a received image and an inclined object such as 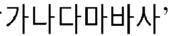 is recognized in the real-time character recognition method, the controller 110 may detect, as a vertical reference line, one of two parallel lines A-B and C-D using the start of the characters as a reference. Herein, the line A-B runs along the right sides of the characters and the line C-D runs along the left sides of the characters. Then the controller 110 may determine the inclination angle r of the object 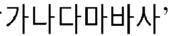 with respect to the detected vertical reference line to be 'b1'. If the electronic device or a paper sheet having characters written on it rotates, an image including an inclined object 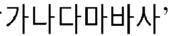 with characters arranged vertically may be displayed, as illustrated in FIG. 5B.

With continued reference to FIG. 2C, if the controller 110 determines the inclination angle r of the object to be 'b1' in operation 255, the controller 110 may adjust the angle of the character recognition area to the inclination angle b1 in operation 257.

If the object is maintained for a predetermined time or longer within the character recognition area adjusted to the inclination angle b1, the controller 110 may transmit the object located within the character recognition area to the character recognizer 170. Upon receipt of a processing result indicating successful character recognition from the character recognizer 170, the controller 110 may determine that character recognition from the object within the character recognition area is successful in operation 259 and may increase the weight k by, for example, 1 due to the successful character recognition in operation 261.

If a character is not recognized from the object in the character recognition area adjusted to the angle of the object during character recognition, for example, due to movement of the paper sheet having the object on it in the vertical character recognition scheme, the controller 110 may adjust the angle of the character recognition area to a changed inclination angle of the object and may then recognize a character from the object in operations 253 through 261.

In this manner, it may be determined whether the electronic device has been moved during character recognition by adjusting a character recognition area to an inclination angle of an object included in an image in the vertical character recognition scheme in operations 253 through 261.

Referring to FIG. 2D, upon detection of movement of the electronic device in operation 271, the controller 110 may determine a type of the movement of the electronic device. If determining that the movement of the electronic device is not a scheme switch triggering movement but a vertical movement involving inclination of the electronic device in operation 273, the controller 110 may detect an inclination angle 'b2' of the electronic device as the angle r in operation 275.

If the movement of the electronic device is a horizontal movement without involving inclination of the electronic device, the controller 110 may not detect the angle of the electronic device because the controller 110 just may only need to perform character recognition on the object located in the character recognition area adjusted to the inclination angle 'b1'. In contrast, if the movement of the electronic device is a vertical movement involving inclination of the electronic device, the angle of the character recognition area defined for character recognition may only need to be adjusted, and thus the controller 110 may detect the angle of the electronic device changed by the movement of the electronic device.

The controller 110 may adjust the angle of the character recognition area to the angle r of the electronic device being 'b2' in operation 277.

If the object is maintained for a predetermined time or longer in the character recognition area adjusted to the inclination angle 'b2' of the object, the controller 110 may transmit the object located in the character recognition area to the character recognizer 170. Upon receipt of a processing result indicating successful character recognition, the controller 110 may determine that character recognition from the object in the character recognition area is successful in operation 279 and may increase the weight k, for example, by 1 in operation 281.

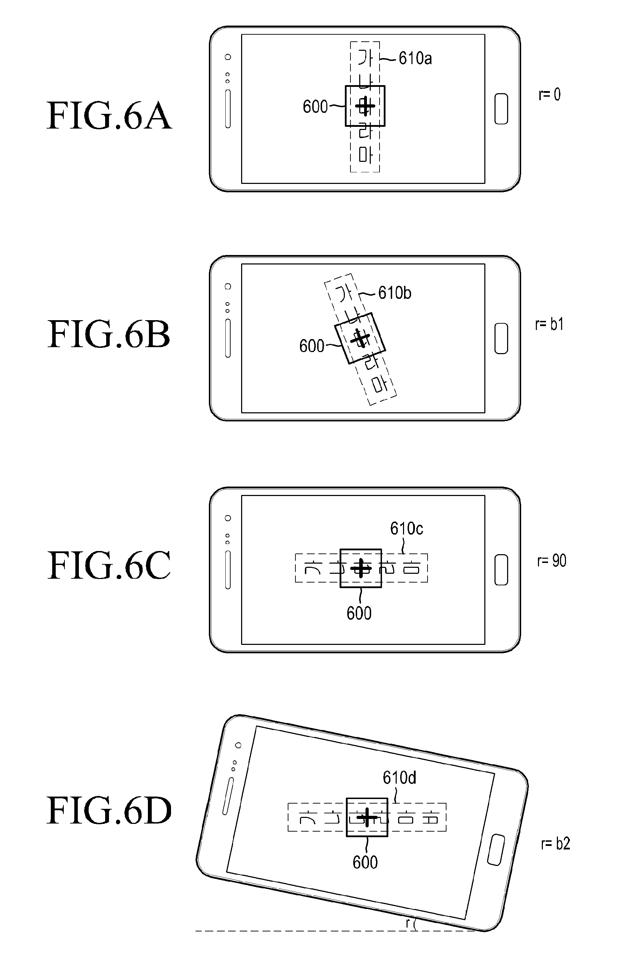

In operation 283, upon selection of termination of the character recognition application, the controller 110 may end the character recognition application. In an embodiment, if determining that termination of the character recognition application has not been selected in operation 283, the controller 110 may recognize a character from the image by adjusting the angle of the character recognition area to the angle of the electronic device according to movement of the electronic device in operations 271 through 283. With reference to FIGS. 6A to 6D, a character recognition operation in the vertical character recognition scheme illustrated in FIGS. 2B, 2C, and 2D will be described below, taking an example.

FIGS. 6A to 6D illustrate an operation for recognizing a character in the vertical character recognition scheme in an electronic device according to an embodiment of the present disclosure.

Referring to FIG. 6A, when a non-inclined object 610a such as 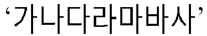 is recognized from an image received from the camera unit 140, a character recognition area 600 is displayed with its angle adjusted to '0' being the inclination angle r of the object 610a.

Referring to FIG. 6B, when an inclined object 610b such as 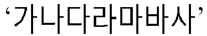 is recognized from an image received from the camera unit 140 due to movement of a paper sheet with the characters written on it, the character recognition area 600 is displayed with its angle adjusted to 'b1' being the inclination angle r of the object 610b. Referring to FIG. 6C, when an inclined object 610c such as 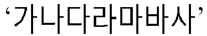 is recognized from an image received from the camera unit 140 due to movement of the paper sheet with the characters written on it, the character recognition area 600 is displayed with its angle adjusted to 90 degrees being the inclination angle r of the object 610c.

Referring to FIG. 6D, when an inclined object 610d such as 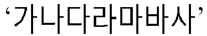 is recognized from an image received from the camera unit 140 due to movement of the paper sheet with the characters written on it, the character recognition area 600 is displayed with its angle adjusted to 'b2' being the inclination angle r of the object 610d.

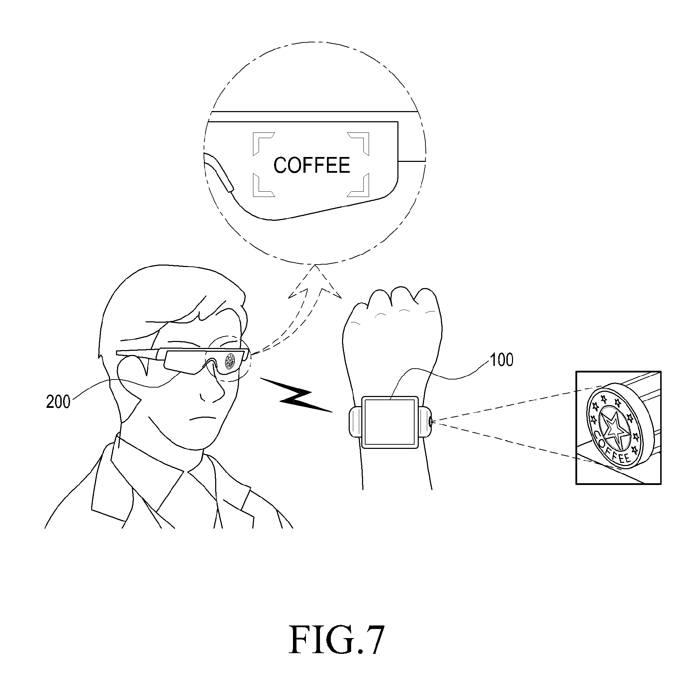

FIG. 7 illustrates an operation for recognizing a character using a plurality of electronic devices according to another embodiment of the present disclosure. In the embodiment of the present disclosure, each of a first electronic device 100 and a second electronic device 200 may include the same components as all or a character recognition-related part of those of the electronic device illustrated in FIG. 1. While the first electronic device 100 and the second electronic device 200 are shown in FIG. 7 as a wrist type and a glasses type, respectively, this is purely examples. Thus the same thing is applicable to an electronic device including all or a character recognition-related part of those of the electronic device illustrated in FIG. 1.

Referring to FIG. 7, while the first electronic device 100 and the second electronic device 200 are connected to each other by short-range communication through their short-range communication units 180, upon selection of a character recognition application in the first electronic device 100, the first electronic device 100 may receive an image from its camera unit. Then the first electronic device 100 may recognize a character in the received image in operation 203 of FIG. 2A through operation 283 of FIG. 2D and then may transmit the recognized character to the second electronic device 200 connected to the first electronic device 100 by short-range communication according to the embodiment of the present disclosure.

Upon receipt of the character from the first electronic device 100, the second electronic device 200 may display the received character on its display unit. A character recognition application may also be selected in the second electronic device 200.

Or while the first electronic device 100 and the second electronic device 200 are connected to each other by short-range communication through their short-range communication units 180, upon selection of a character recognition application in each of the first and second electronic devices 100 and 200, the first electronic device 100 may receive an image from its camera unit. Then the first electronic device 100 may transmit the received image to the second electronic device 200 connected to the first electronic device 100 by short-range communication.

Upon receipt of the image from the first electronic device 100, the second electronic device 200 may recognize a character in the received image in operation 203 of FIG. 2A through operation 283 of FIG. 2D and then may display the recognized character on its display unit.

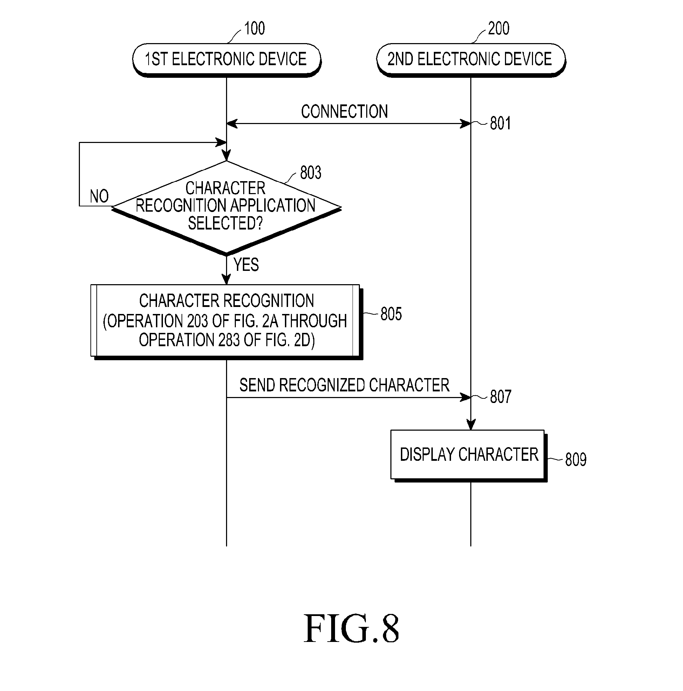

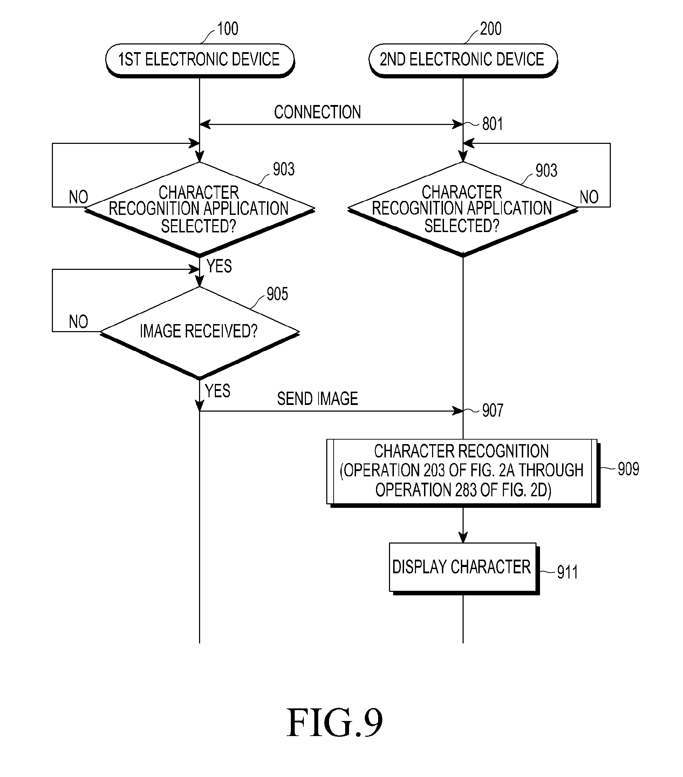

FIGS. 8 and 9 illustrate processes for character recognition operations according to embodiments of the present disclosure. In an embodiment, FIGS. 8 and 9 provide a detailed description of the operation illustrated in FIG. 7.

Referring to FIG. 8, the first electronic device 100 may be connected to the second electronic device 200 by short-range communication in operation 801. Upon selection of a character recognition application in the first electronic device 100 in operation 803, the first electronic device 100 may recognize a character from an image received from the camera unit of the first electronic device 100 by performing operation 203 of FIG. 2A through operation 283 of FIG. 2D, in operation 805. The first electronic device 100 may transmit the recognized character to the second electronic device 200 in operation 807. In operation 809, the second electronic device 200 may display the character received from the first electronic device 100 on the display unit of the second electronic device 200.

Referring to FIG. 9, while the first and second electronic devices 100 and 200 are connected to each other by short-range communication through the short-range communication units 180 in operation 901, a character recognition application may be selected in each of the first and second electronic devices 100 and 200 in operation 903. Upon receipt of an image from the camera unit of the first electronic device 100 in operation 905, the first electronic device 100 may transmit the received image to the second electronic device 200 in operation 907.

Upon receipt of the image from the first electronic device 100, the second electronic device 200 may recognize a character from the received image by performing operation 203 of FIG. 2A through operation 283 of FIG. 2D, in operation 909. In operation 911, the second electronic device 200 may display the recognized character on the display unit of the second electronic device 200.

In the embodimentwhere a character is recognized using a plurality of electronic devices as illustrated in FIGS. 7, 8 and 9, a user may view the recognized character without directly viewing an object subject to character recognition through an electronic device.

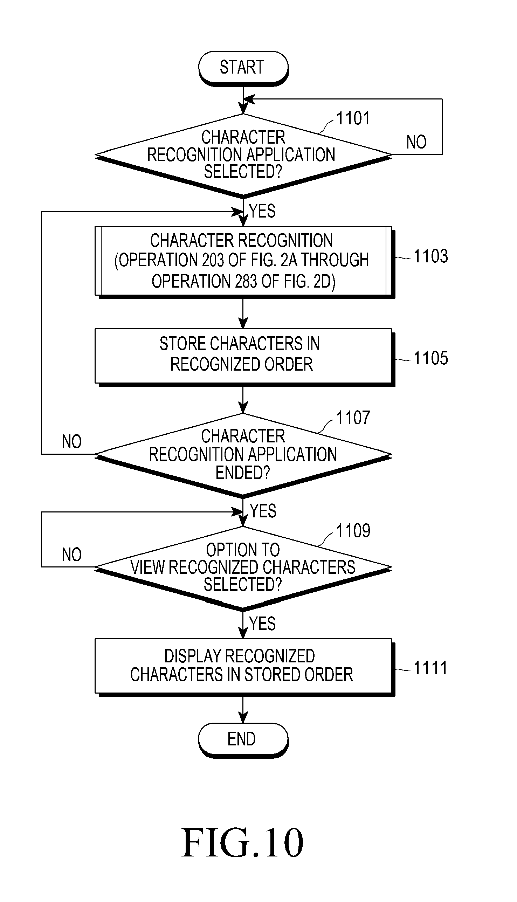

FIG. 10 illustrates process for an operation for recognizing a character in an electronic device according to another embodiment of the present disclosure.

The embodiment of the present disclosure may be described with reference to FIG. 1.

Referring to FIG. 10, if determining that a character recognition application has been selected in the electronic device in operation 1101, the controller 110 may execute the character recognition application. Along with the execution of the character recognition application, the controller 110 may recognize a character in an image received from the camera unit 140 by performing operation 203 of FIG. 2A through operation 283 of FIG. 2D, in operation 1103.

In operation 1105, the controller 110 may store the recognized character in the memory 130. In operations 1103 and 1105, the character may be recognized in real time in the image received from the camera unit 140 and may be stored in the memory 130.

Upon selection of termination of the character recognition application in operation 1107, the controller 110 may end the character recognition application. Subsequently, upon selection of an option to view the recognized character in operation 1109, the controller 110 may display the recognized character stored in the memory 130 on the display unit 160 in operation 1111.

If a character is recognized in real time in an image received from a camera unit of an electronic device and stored in a memory of the electronic device, as illustrated in FIG. 10, a user may use the recognized character at an intended time in various manners. The proposed electronic device and method for recognizing a character in the electronic device may be implemented as computer-readable code in a computer-readable recording medium. The computer-readable recording medium may include any kind of recording device storing computer-readable data. Examples of the recording medium may include Read Only Memory (ROM), Random Access Memory (RAM), optical disk, magnetic tape, floppy disk, hard disk, non-volatile memory, and the like, and may also include the medium that is implemented in the form of carrier waves (for example, transmission over the Internet). In addition, the computer-readable recording medium may be distributed over the computer systems connected over the network, and computer-readable codes may be stored and executed in a distributed manner.

As is apparent from the foregoing description, an electronic device and a method for recognizing a character in the electronic device according to various embodiments of the present disclosure may increase a character recognition rate irrespective of a rotation position of the electronic device or a character arrangement direction. Although the present disclosure has been described with an example embodiment, various changes and modifications may be suggested to one skilled in the art. It is intended that the present disclosure encompass such changes and modifications as fall within the scope of the appended claims.

## Claims

1. An electronic device comprising:
a display unit configured to, upon receipt of an image in a real-time character recognition method, display a character recognition area defined for character recognition adjusted to an inclination angle of an object included in the received image; and
a controller configured to detect the inclination angle of the object included in the image, to adjust an angle of the character recognition area defined for character recognition to the inclination angle of the object, and to control recognition of a character from the object in the angle-adjusted character recognition area.

2. The electronic device of claim 1, wherein the controller recognizes an object in the received image based on a first reference, detects a first reference line using the recognized object, detects an inclination angle of the object with respect to the first reference line, adjusts the angle of the character recognition area to the inclination angle of the object, and upon recognition of a character from the object in the angle-adjusted character recognition area, switches to a first-direction character recognition scheme,
wherein the controller sets an angle r to 0 and a weight k to 1 and each time a character is recognized from the object located in the angle-adjusted character recognition area, increases the weight k.

3. The electronic device of claim 2, wherein if the electronic device moves in the first-direction character recognition scheme, the controller detects an angle of the electronic device changed by the movement of the electronic device, adjusts the angle of the character recognition area to the angle of the electronic device, recognizes a character from the object in the angle-adjusted character recognition area, and, upon recognition of a character from the object, increases the weight k,
wherein if the electronic device moves, the controller determines a type of the movement of the electronic device and, if the movement of the electronic device is a vertical movement involving inclination of the electronic device, the controller detects the angle of the electronic device.

4. The electronic device of claim 2, wherein if the electronic device moves in the first-direction character recognition scheme, the controller determines whether the movement of the electronic device is a scheme switch triggering movement and, if the movement of the electronic device is a scheme switch triggering movement, the controller switches to a second-direction character recognition scheme.

5. The electronic device of claim 4, wherein if a variation in the movement of the electronic device or a difference between a current received image and a previous received image is equal to or higher than a threshold, the controller determines that the movement of the electronic device is a scheme switch triggering movement.

6. The electronic device of claim 4, wherein if the movement of the electronic device is a scheme switch triggering movement, the controller recognizes the object in the received image based on the first reference, detects the first reference line using the recognized object, detects the inclination angle of the object with respect to the first reference line, adjusts the angle of the character recognition area to the inclination angle of the object, switches to the second-direction character recognition scheme if a character is not recognized from the object in the angle-adjusted character recognition area, and resets the angle r to 0 and the weight k to 1, upon switching to the second-direction character recognition scheme.

7. The electronic device of claim 4, wherein the controller recognizes an object in the received image based on a second reference, detects a second reference line using the recognized object, detects an inclination angle of the object with respect to the second reference line, adjusts the angle of the character recognition area to the inclination angle of the object, recognizes a character from the object in the angle-adjusted character recognition area, and if a character is recognized from the object in the angle-adjusted character recognition area, increases the weight k.

8. The electronic device of claim 4, wherein if the electronic device moves in the second-direction character recognition scheme, the controller detects an angle of the electronic device changed by the movement of the electronic device, adjusts the angle of the character recognition area to the angle of the electronic device, recognizes the object in the angle-adjusted character recognition area, and, if a character is recognized from the object in the angle-adjusted character recognition area, increases the weight k,
wherein if the electronic device moves, the controller determines a type of the movement of the electronic device and, if the movement of the electronic device is a vertical movement involving inclination of the electronic device, detects the angle of the electronic device.

9. The electronic device of claim 1, further comprising a short-range communication unit configured to connect the electronic device to another electronic device, wherein the controller controls transmission of the recognized character to the other electronic device to allow display of the recognized character on the other electronic device, and
wherein the controller controls transmission of the received image to the other electronic device to allow the other electronic device to perform character recognition on the image.

10. The electronic device of claim 1, further comprising a memory configured to store the recognized image in the real-time character recognition method,
wherein the controller controls storing of the recognized character in the memory in the real-time character recognition method.

11. A method for recognizing a character in an electronic device, the method comprising:
detecting an inclination angle of an object included in a received image in a real-time character recognition method;
adjusting an angle of a character recognition area defined for character recognition to the inclination angle of the object; and
recognizing a character from the object in the angle-adjusted character recognition area.

12. The method of claim 11, further comprising:
recognizing an object in the received image based on a first reference;
detecting a first reference line using the recognized object;
detecting an inclination angle of the object with respect to the first reference line;
adjusting the angle of the character recognition area to the inclination angle of the object; and
upon recognition of a character from the object in the angle-adjusted character recognition area, switching to a first-direction character recognition scheme,
, wherein an angle r is set to 0 and a weight k is set to 1, and
wherein each time a character is recognized from the object in the angle-adjusted character recognition area, the weight k is increased.

13. The method of claim 12, if the electronic device moves in the first-direction character recognition scheme, further comprising:
detecting an angle of the electronic device changed by the movement of the electronic device;
adjusting the angle of the character recognition area to the angle of the electronic device;
recognizing a character from the object in the angle-adjusted character recognition area; and
upon recognition of a character from the object, increasing the weight k, wherein the detecting of an angle of the electronic device comprises:
if the electronic device moves, determining a type of the movement of the electronic device; and
if the movement of the electronic device is a vertical movement involving inclination of the electronic device, detecting the angle of the electronic device.

14. The method of claim 12, if the electronic device moves in the first-direction character recognition scheme, further comprising:
determining whether the movement of the electronic device is a scheme switch triggering movement; and
if the movement of the electronic device is a scheme switch triggering movement, switching to a second-direction character recognition scheme.

15. The method of claim 14, wherein the determining comprises, if a variation in the movement of the electronic device or a difference between a current received image and a previous received image is equal to or higher than a threshold, determining that the movement of the electronic device is a scheme switch triggering movement.

16. The method of claim 14, wherein if the movement of the electronic device is a scheme switch triggering movement, the switching comprises:
recognizing the object in the received image based on the first reference;
detecting the first reference line using the recognized object;
detecting the inclination angle of the object with respect to the first reference line;
adjusting the angle of the character recognition area to the inclination angle of the object;
if a character is not recognized from the object in the angle-adjusted character recognition area, switching to the second-direction character recognition scheme; and
resetting the angle r to 0 and the weight k to 1, upon switching to the second-direction character recognition scheme.

17. The method of claim 14, further comprising:
recognizing an object in the received image based on a second reference;
detecting a second reference line using the recognized object;
detecting an inclination angle of the object with respect to the second reference line;
adjusting the angle of the character recognition area to the inclination angle of the object;
recognizing a character from the object in the angle-adjusted character recognition area; and
if a character is recognized from the object in the angle-adjusted character recognition area, increasing the weight k.

18. The method of claim 14, wherein if the electronic device moves in the second-direction character recognition scheme, further comprising:
detecting an angle of the electronic device changed by the movement of the electronic device;
adjusting the angle of the character recognition area to the angle of the electronic device;
recognizing the object in the angle-adjusted character recognition area; and
if a character is recognized from the object in the angle-adjusted character recognition area, increasing the weight k,
wherein the detecting of an angle of the electronic device comprises:
if the electronic devices moves, determining a type of the movement of the electronic device; and
if the movement of the electronic device is a vertical movement involving inclination of the electronic device, detecting the angle of the electronic device.

19. The method of claim 11, further comprising, upon recognition of a character in the real-time character recognition method, transmitting the recognized character to another electronic device connected to the electronic device by short-range communication to allow display of the recognized character on the other electronic device, and upon receipt of an image, transmitting the received image to the other electronic device to allow the other electronic device to perform character recognition on the image.

20. The method of claim 11, further comprising, upon recognit ion of a character in the real-time character recognition method, storing the recognized image
